# EUROPÄISCHE PATENTSCHRIFT

(11) **EP 0 726 997 B1**
(45) Veröffentlichungstag und Bekanntmachung des Hinweises auf die Patenterteilung: **28.01.1998**
(21) Anmeldenummer: 94930989.2
(22) Anmeldetag: 27.10.1994
(51) Int. Cl.: E04G 21/18, G01B 3/56

(54) **VORRICHTUNG ZUM VERBINDEN DER SCHENKEL EINES WINKELS**
DEVICE FOR CONNECTING THE LEGS OF A SET SQUARE
DISPOSITIF PERMETTANT DE RELIER LES BRANCHES D'UNE EQUERRE

(30) Priorität: 05.11.1993 DE 4337885
(43) Veröffentlichungstag der Anmeldung: 21.08.1996
(73) Patentinhaber: Klaus Bau-Technik GmbH, 86163 Augsburg (DE)
(72) Erfinder: HOPF, Leonhard, D-86707 Westendorf (DE)
(74) Vertreter: Speidel, Eberhardt
(86) Internationale Anmeldenummer: EP9403537
(87) Internationale Veröffentlichungsnummer: WO9512728

(56) Entgegenhaltungen:
- DE-A- 2 814 712
- FR-A- 1 568 281
- GB-A- 2 196 048
- GB-A- 2 265 018
- US-A- 3 303 569
- US-A- 4 562 649
- US-A- 5 077 910

## Beschreibung

Die Erfindung betrifft eine Vorrichtung zum Verbinden der Schenkel eines Winkels, beispielsweise eines Bauwinkels, entsprechend dem Oberbegriff des Anspruchs 1.

Im Bauwesen, aber auch bei Heimwerkern und auf anderen Gebieten besteht häufig die Notwendigkeit, längere Strecken oder Bauteile, beispielsweise Mauern oder Zwischenwände, in einem bestimmten, meist im rechten Winkel zueinander anzuordnen oder Linien im rechten Winkel zueinander zu ziehen. Die üblichen Bauwinkel haben den Mangel, daß ihre Schenkel verhältnismäßig kurz sind. Sind längere Linien zu ziehen, so werden zur Verlängerung üblicherweise Latten an die Schenkel angelegt. Dabei sind Fluchtungsfehler praktisch unvermeidlich. Längere Schenkel machen den Bauwinkel jedoch äußerst unhandlich, insbesondere für den Transport und für die Aufbewahrung.

Zur Vermeidung dieses Nachteils ist es bekannt (DE-GM 92 03 881), die beiden Schenkel des Winkels lösbar an einem Zwischenstück (Eckstück) zu befestigen, wobei zwischen den Endflächen der Schenkel und dem Zwischenstück eine Spannvorrichtung in Form der üblichen lösbaren Möbelverbinder vorgesehen ist. Durch diesen Aufbau ist es möglich, lange Schenkel zu verwenden, da der Winkel zum Transport und zur Lagerung zerlegt werden kann und erst am Einsatzort zusammengesetzt wird. Nachteilig ist allerdings die geringe Stabilität des zusammengesetzten Winkels und die dadurch verursachten Meßfehler insbesondere bei längeren Schenkeln und der Umstand, daß an den Endflächen der Schenkel und den entsprechenden Flächen am Zwischenstück miteinander zusammenwirkende Spannvorrichtungen vorgesehen werden müssen, so daß nur vorgefertigte Schenkel verwendet werden können, die teuer sind. Die als Spannvorrichtungen verwendeten Möbelverbinder sind bei oftmaligem Lösen und Anziehen starkem Verschleiß ausgesetzt, wodurch die Maßhaltigkeit beeinträchtigt wird.

Aufgabe der Erfindung ist es, eine Vorrichtung der gattungsgemäßen Art zu schaffen, mit der unter Zuhilfenahme einfacher Latten aus Holz, Leichtmetall oder einem anderen Werkstoff ein äußerst stabiler Winkel hergestellt werden kann, mit dem lange Strecken, Bauteile oder Linien zuverlässig in einem vorbestimmten Winkel, vorzugsweise im rechten Winkel, zueinander angeordnet bzw. gezogen werden können.

Die gestellte Aufgabe wird erfindungsgemäß durch die im Kennzeichen des Anspruchs 1 angegebenen Merkmale gelöst.

Bei der erfindungsgemäßen Vorrichtung werden die Schenkel über eine längere Strecke in den Schienen des Eckstückes geführt, so daß der zusammengesetzte Winkel äußerst stabil ist. Dadurch, daß mit der vorgeschlagenen Vorrichtung als Winkelschenkel einfache Latten verwendet werden können, läßt sich äußerst preisgünstig ein Winkel mit beliebiger Schenkellänge zusammensetzen.

Vorzugsweise sind zum lösbaren Verbinden jedes Schenkels mit einer Schiene an jeder Schiene zwei in einem Abstand voneinander angeordnete Haltemittel vorgesehen, um sicherzustellen, daß die Schenkel an den Schienen anliegen und dadurch miteinander den gewünschten, vorzusweise rechten Winkel einschließen. Die Haltemittel sind vorzugsweise die Schenkel umgreifende Spannbänder, beispielsweise in Form üblicher Rohrschellen, damit die Schenkel leicht mit den Schienen verbunden und von diesen gelöst werden können.

Vorzugsweise sind die Schienen an beiden Enden offen, so daß eine der Latten, welche die Schenkel bilden, über das Eckstück hinausragend angebracht werden kann und ein T-förmiges Gebilde entsteht, mit dem noch präziser ein rechter Winkel zu der von dieser Latte gebildeten Basis bestimmt werden kann und auch Außenwinkel überprüft werden können.

Zur Stabilisierung der Schienen in ihrer Lage zueinander können die Schienen verstrebt sein, z.B. durch eine diagonal zu den Schienen verlaufende, d.h. bei einem rechten Winkel die Hypothenuse darstellende Strebe, die mit den Schienen verbunden ist, oder durch eine die Schienen verbindende Platte. Die Strebe bzw. die Platte kann mit einer Gradeinteilung versehen sein, um mittels einer Schlagschnur, die in der Ecke des Eckstückes angebracht wird, beliebige Winkel zwischen den Schenkeln zu definieren.

Vorzugsweise ist das Eckstück zusammen mit den Schienen und der Verstrebung von einem einstückigen Bauteil gebildet. Ein derartiges Bauteil kann äußerst preiswert als Kunststoff- oder Leichtmetall-Spritzgußteil oder als gestanztes Metallteil hergestellt werden, so daß es auch für Heimwerker erschwinglich ist.

Um den Platzbedarf der Vorrichtung beim Transport und bei der Aufbewahrung zu verringern, kann das Eckstück in seiner Ecke geteilt sein, wobei die beiden Teile scharnierartig miteinander verbunden sind. Das Eckstück kann also mit den Schienen wie ein Zirkel zusammengeklappt werden. Die so ausgebildete Vorrichtung kann auch als Winkelmesser oder zum Ziehen von langen Linien benutzt werden, die in einem anderen als einem rechten Winkel zueinander stehen. Ist zwischen den Schenkeln eine Strebe vogesehen, so muß diese entweder von einer Schiene lösbar sein oder aus zwei scharnierartig miteinander verbundenen Teilen bestehen, um die Vorrichtung zusammenklappen zu können.

Einige Ausführungsbeispiele der Erfindung werden im folgenden unter Bezugnahme auf die Zeichnungen beschrieben. Es zeigt:
- Fig. 1: ein erste Ausführungsbeispiel in Draufsicht,
- Fig. 2: einen Schnitt entlang Linie 2-2 in Fig. 1 in größerem Maßstab,
- Fig. 3: eine Draufsicht entsprechend Fig. 1, wobei eine der die Schenkel bildenden Latten durch die Vorrichtung hindurchgeschoben ist und mit der anderen Latte ein T bildet,
- Fig. 4: eine Abwandlung der Ausführung von Fig. 1,
- Fig. 5: ein zweites Ausführungsbeispiel, bei dem das Eckstück aus zwei scharnierartig miteinander verbundenen Teilen besteht, und
- Fig. 6: die Ausführung von Fig. 5 in teilweise zusammengeklapptem Zustand.

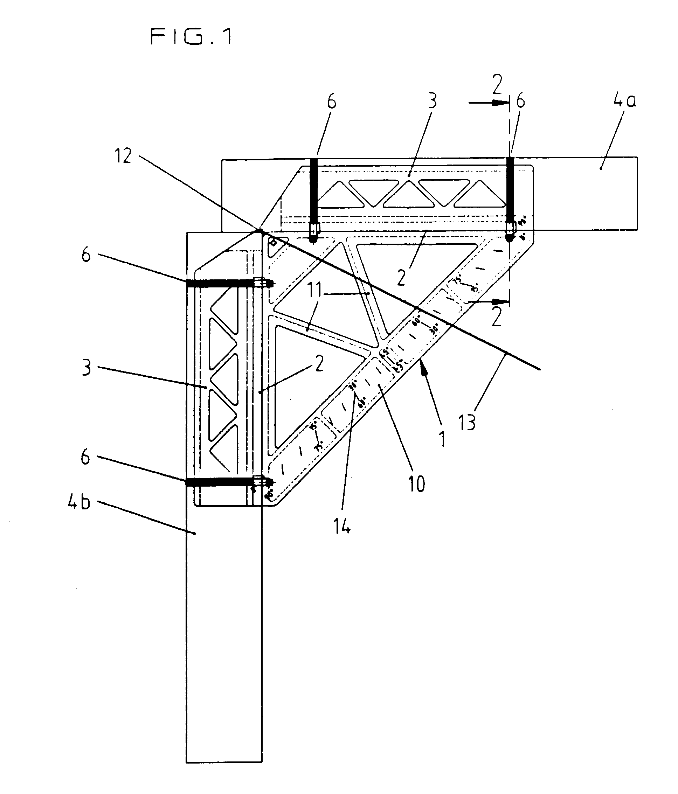

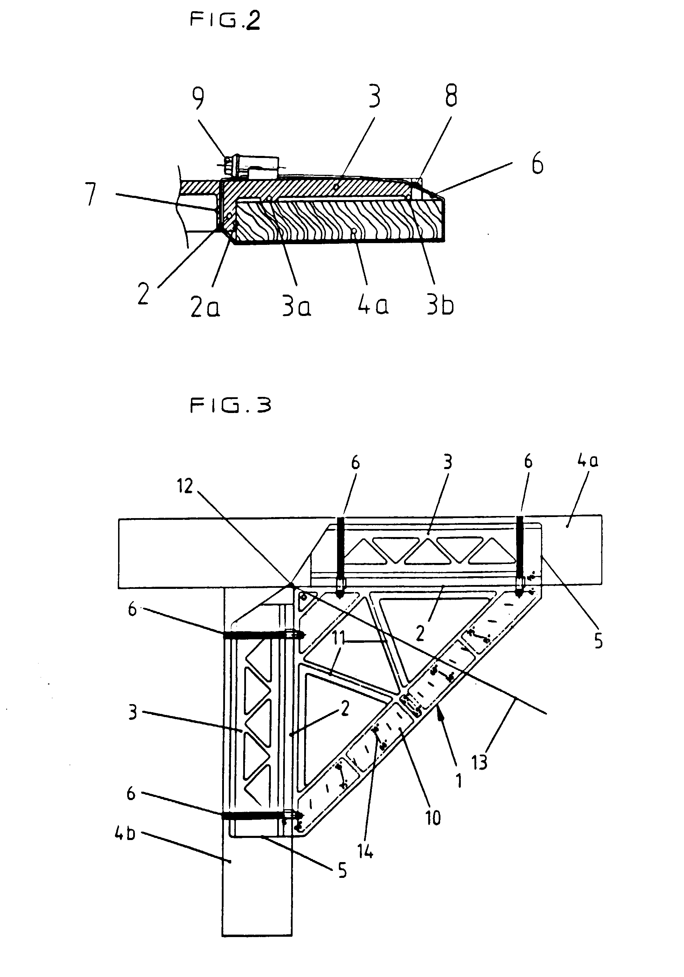

Die in Fig. 1 und 2 dargestellte Vorrichtung besteht aus einem Eckstück 1 mit zwei im Ausführungsbeispiel im rechten Winkel zueinander stehenden Schenkeln 2. An eine Längskante jedes Schenkels 2 schließt sich, wie aus Fig. 2 ersichtlich, eine dazu senkrecht stehende Wand 3 an, wodurch jeweils eine Schiene 5 mit L-förmigem Querschnitt gebildet wird, die zur Aufnahme einer Latte 4a bzw. 4b dient, welche einen Schenkel des zu bildenden Winkels darstellt. Die Innenflächen 2a und 3a,3b der Schenkel 2 und der Wände 3 bilden Anlageflächen für die Latten 4a bzw. 4b, die aus einem beliebigen Material, beispielsweise Holz oder Leichtmetall, bestehen und eine beliebige Länge haben können. Die Innenflächen 3a und 3b sind von Längsrippen gebildet, um eine sichere Auflage der Latte 4a bzw. 4b zu gewährleisten. Gehalten werden die Latten an ihren Schienen 5 jeweils durch zwei beabstandete Spannbänder 6, die sich um die Latten herum erstrecken und durch Durchbrüche 7 und 8 in den Schenkeln 2 und in den Wänden 3 hindurchgeführt sind und mittels einer Schraube 9 gespannt werden. Dadurch werden die Latten fest an die Innenflächen 2a und 3a,3b angelegt, so daß sie exakt in dem Winkel zueinander stehen, der durch die Lage der Schenkel 2 bzw. deren Innenflächen 2a bestimmt ist und im Ausführungsbeispiel 90° beträgt, jedoch grundsätzlich auch einen anderen Wert haben könnte. Die Spannbänder können handelsübliche Rohrschellen, Klemmschloßgurte oder Spannbänder aus Polyester sein, die bei Verschleiß problemlos ausgetauscht werden können.

Zur Versteifung der Schenkel 2 ist das Eckstück 1 mit einer diagonal zwischen diesen verlaufenden Strebe 10 versehen, die ihrerseits durch angeformte Stege 11 versteift ist. Dadurch erhält die Vorrichtung, die vorzugsweise einstückig aus Kunststoff oder Leichtmetall hergestellt wird, eine außerordentlich große Steifigkeit. Die Schenkel 2, die Wände 3, die Streben 10 und die Stege 11 können zur Versteifung mit Rippen und zur Gewichtserleichterung mit Ausschnitten versehen sein.

Um beliebige Winkel zwischen den Schenkeln 2 markieren zu können, ist in der Ecke des Eckstückes 1 ein Loch 12 zur Anbringung einer Schlagschnr 13 vorgesehen, und die Strebe 10 ist mit einer Gradeinteilung 14 versehen.

Durch die lange Führung der Latten 4 an dem steifen Eckstück 1 hat der zusammengebaute Winkel eine große Stabilität. Da als Meß- oder Winkelschenkel einfache Latten verwendet werden können, braucht der Benutzer nur die dargestellte Vorrichtung zu erwerben, um einen Winkel nach seinen Bedürfnissen zusammenzubauen.

Die Schienen 5 sind an beiden Enden offen, so daß eine Latte 4a durch das Eckstück 1 hindurchgeschoben werden kann, wie dies in Fig. 3 dargestellt ist, während die andere Latte 4b stumpf an diese anstößt. Dadurch wird ein T-förmiges Gebilde geschaffen mit einer langen, von der Latte 4a gebildeten Basis, von der die andere Latte 4b im rechten Winkel absteht. Hierdurch wird auch das Prüfen oder Anreißen eines Außenwinkels möglich.

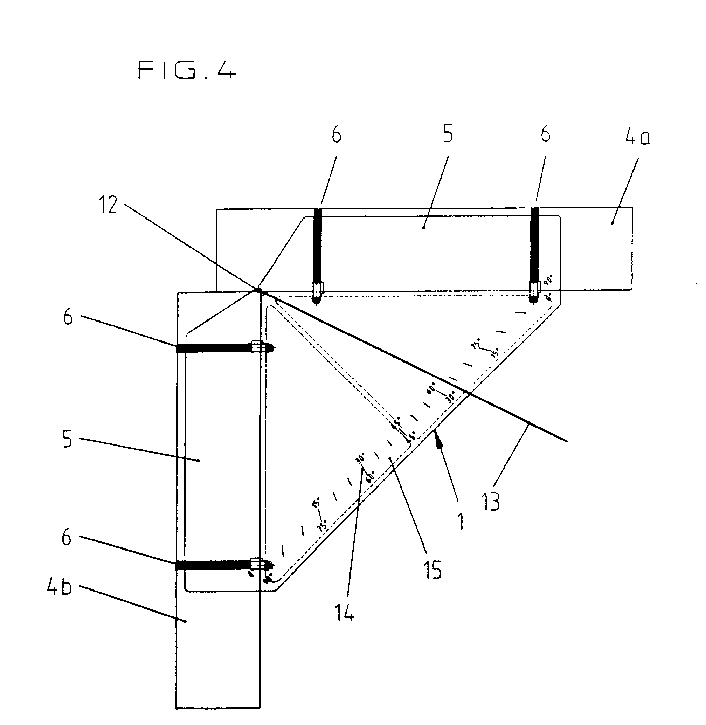

Das Beispiel gemäß Fig. 4 unterscheidet sich von demjenigen gemäß Fig. 1 bis 5 im Prinzip nur dadurch, daß die Verstrebung der Schienen 5 durch eine Platte 15 erfolgt. Diese Vorrichtung kann wiederum einstückig sein oder auch aus miteinander verbundenen Kunststoff- oder Blechpreßteilen bestehen. Wie im ersten Beispiel ist in der Ecke ein Loch 12 zur Befestigung einer Schlagschnur 13 vorgesehen und die Platte 15 mit einer Gradeinteilung 14 versehen.

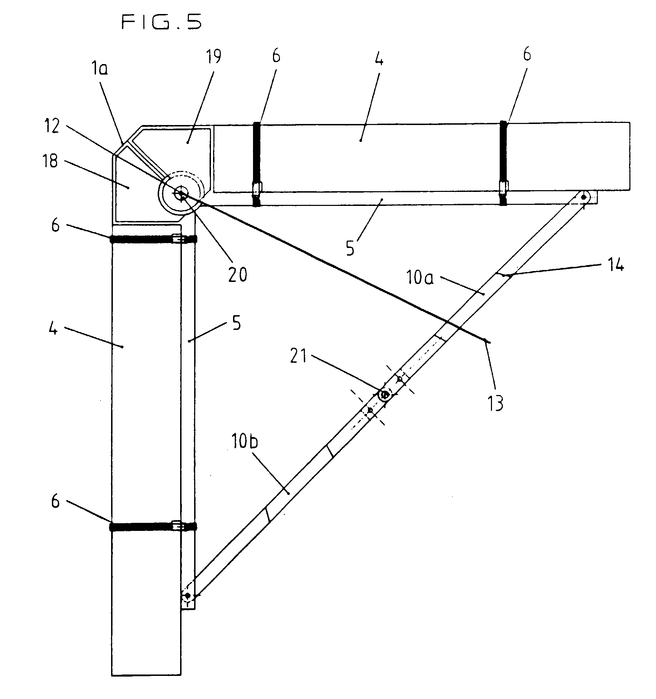

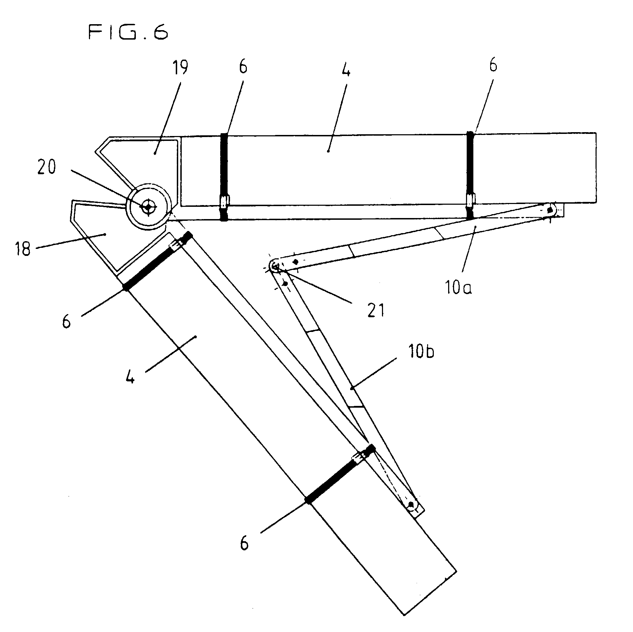

Es sei nun auf Fig. 5 bezuggenommen, die eine Ausführung zeigt, welche sich von den vorhergehenden dadurch unterscheidet, daß das Eckstück la aus zwei Hälften 18 und 19 besteht, die an der Ecke durch ein Scharnier 20 miteinander verbunden sind und jeweils eine Schiene 5 zur Aufnahme einer Latte 4 aufweisen. Die Schienen 5 schließen miteinander einen rechten Winkel ein, wenn sie in der in Fig. 5 gezeigten Lage sind. Die Verbindung der Vorrichtung mit den Latten 4 erfolgt wiederum durch Spannbänder 6. Durch das Scharnier 20 kann die Vorrichtung zusammengeklappt werden, wie in Fig. 6 gezeigt, wodurch einerseits der Platzbedarf für die Aufbewahrung und den Transport der Vorrichtung auf ein Mindestmaß reduziert wird und andererseits die Möglichkeit besteht, auch von 90° abweichende Winkel zu messen oder anzuzeichnen. Ist eine die beiden Schienen verbindende Strebe vorgesehen, so muß sie naturgemäß entweder an einer Schiene lösbar sein oder, wie gezeigt, aus zwei mit den Schienen schwenkbar verbundenen Teilen 10a und 10b bestehen, die durch ein Scharnier 21 gelenkig miteinander verbunden sind, um die Vorrichtung zuammenklappen zu können. Die Teile 10a und 10b können wiederum mit einer Gradeinteilung 14 versehen sein, um mittels einer Schlagschnur 13, die beispielsweise an der Achse des Scharniers 20 angebracht ist, beliebige Winkel zwischen den Schenkeln zu definieren.

## Patentansprüche

1. Vorrichtung zum Verbinden der Schenkel (4) eines Winkels, beispielsweise eines Bauwinkels, mit einem Eckstück (1), das in einem Winkel, vorzugsweise im rechten Winkel zueinander stehende Aufnahmen zur lösbaren Anbringung der Schenkel (4) aufweist,
dadurch gekennzeichnet,
- daß die Aufnahmen von zwei Schienen (5) gebildet sind, die miteinander einen Winkel einschließen,
- daß jede Schiene einen L- oder U-förmigen Querschnitt hat, der bezüglich der Vorrichtung nach außen zu offen ist und Anlageflächen (2a,3a,3b) für die Schenkel (4) aufweist,
- und daß an jeder Schienen Haltemittel (6) zum lösbaren Verbinden der Schenkel (4) mit den Schienen (5) vorgesehen sind.

2. Vorrichtung nach Anspruch 1, dadurch gekennzeichnet, daß an jeder Schiene (5) für einen Schenkel (4a;4b) zwei in einem Abstand voneinander angeordnete Haltemittel (6) vorgesehen ist.

3. Vorrichtung nach Anspruch 1 oder 2, dadurch gekennzeichnet, daß die Haltemittel (6) von Spannbändern gebildet sind.

4. Vorrichtung nach Anspruch 3, dadurch gekennzeichnet, daß die Schienen (5) mit Durchbrüchen (7,8) zum Durchführen der Spannbänder (6) versehen sind.

5. Vorichtung nach Anspruch 1, dadurch gekennzeichnet, daß die Schienen (5) an beiden Enden offen sind.

6. Vorrichtung nach Anspruch 1, dadurch gekennzeichnet, daß die Schienen (5) miteinander verstrebt sind.

7. Vorrichtung nach Anspruch 6, dadurch gekennzeichnet, daß die Verstrebung von einer diagonal zu den Schienen (5) verlaufenden und mit diesen verbundenen Strebe (10) gebildet ist.

8. Vorrichtung nach Anspruch 6, dadurch gekennzeichnet, daß die Verstrebung von einer die Schienen (5) verbindenden Platte (15) gebildet ist.

9. Vorrichtung nach einem der Ansprüche 6 bis 8, dadurch gekennzeichnet, daß die Verstrebung (10;15), das Eckstück (1) und die Schienen (5) von einem einstückigen Bauteil gebildet sind.

10. Vorrichtung nach Anspruch 9, dadurch gekennzeichnet, daß das Bauteil ein Kunststoff-Teil ist.

11. Vorrichtung nach Anspruch 9, dadurch gekennzeichnet, daß das Bauteil ein Leichtmetall-Spritzgußteil ist.

12. Vorrichtung nach einem der Ansprüche 7 bis 11, dadurch gekennzeichnet, daß in der Ecke des Eckstückes (1) Mittel (12) zum Anbringen einer Schlagschnur (13) vorgesehen sind und daß die diagonale Strebe (10) bzw. die Platte (15) mit einer Gradeinteilung (14) versehen ist.

13. Vorrichtung nach Anspruch 1, dadurch gekennzeichnet, daß das Eckstück (la) in seiner Ecke geteilt ist und daß die beiden Teile (18,19) scharnierartig miteinander verbunden sind.

14. Vorrichtung nach den Ansprüchen 7 und 13, dadurch gekennzeichnet, daß die zwischen den Schienen (5) angeordnete Strebe aus zwei in der Mitte scharnierartig miteinander verbundenen Teilen (10a,10b) besteht.

## Claims

1. Device for connecting the arms (4) of an angle, for example of a construction angle, with a corner piece (1) which has receptacles which are at an angle, preferably a right angle, to each other, for the detachable fixing of the arms, characterized in that
- the receptacles are formed from two rails (5) which form an angle with each other,
- each rail has a L- or U-shaped cross-section which is open outwardly in relation to the device, and which have abutment surfaces (2a,3a) for the arms (4), and
- retaining means (6) for the detachable connection of the arms (4) to the rails (5) are provided on each rail (5).

2. Device according to claim 1, characterized in that on each rail (5) there are provided for one arm (4a,4b) two retaining means (6) which are arranged in a spacing from each other.

3. Device according to claim 1 or 2, characterized in that the retaining means (6) are formed by clamping bands.

4. Device according to claim 3, characterized in that the rails (5) are provided with openings (7) for passing through the clamping bands (6).

5. Device according to claim 1, characterized in that the rails (5) are open at both ends.

6. Device according to claim 1, characterized in that the rails (5) are braced to each other.

7. Device according to claim 6, characterized in that the bracing is formed by a strut (10) which runs diagonally to the rails (5) and is connected to them.

8. Device according to claim 6, characterized in that the bracing is formed by a plate (15) interconnecting the rails (5).

9. Device according to any of claims 6 to 8, characterized in that the bracing (10;15), the corner piece (1) and the rails (5) are formed by a one-piece component.

10. Device according to claim 9, characterized in that the component is a plastic part.

11. Device according to claim 9, characterized in that the component is a light metal injection-molded part.

12. Device according to any of claims 7 to 11, characterized in that means (12) for fixing a marking cord (13) are provided in the corner of the corner piece (1), and that the diagonal strut (10) or the plate (15) is provided with a graduation in degrees.

13. Device according to claim 1, characterized in that the corner piece (la) is divided in its corner and that the two parts (18,19) are connected together in hinged manner.

14. Device according to claims 7 and 13, characterized in that the strut which is arranged between the rails (5) is composed of two parts (10a and 10b) which are connected together in hinged manner in the center.

## Revendications

1. Dispositif permettant de relier les tranches (4) d'une équerre, notemment pour contructions, avec un gousset (1) présentant des portes-pièces disposés en angle, préferablement en angle droit, servant au montage de façon amovible des tranches (4), caractérisé en ce que
- les portes-pièces sont deux bandes (5) formant un angle,
- chaque bande présente une section en L ou en U ouverte vers l'extérieur par rapport au dispositif et possédant des surfaces d'appui (2a,3a,4a), pour les branches (4),
- et que chaque bande est équipée de moyens de support (6) pour assemblage amovible des tranches (4) avec les bandes (5).

2. Dispositif selon la revendication 1, caractérisé en ce que chaque bande (5) appartenant à une branche (4a;4b) présente deux moyens de support (6) écartés l'un par rapport à l'autre.

3. Dispositif selon la revendication 1 ou 2, caractérisé en ce que les moyens de support (6) sont des colliers de fixation.

4. Dispositif selon la revendication 3, caractérisé en ce que les bandes (5) présentent des perforations (7,8) permettant le passage des colliers de fixation (6).

5. Dispositif selon la revendication 1, caractérisé en ce que les bandes (5) sont ouvertes à leurs deux extrémités.

6. Dispositif selon la revendication 1, caractérisé en ce que les bandes (5) sont contrefichées entres elles.

7. Dispositif selon la revendication 6, caractérisé en ce que la contrefiche est constituée par un appui (10) disposé diagonalement par rapport aux bandes (5) et fixé à celles-ci.

8. Dispositif selon la revendication 6, caractérisé en ce que la contrefiche consiste en une plaque (15) reliant les bandes (5) entre elles.

9. Dispositif selon l'une des revendications 6 à 8, caractérisé en ce que la contrefiche (10;15), le gousset (1) et les bandes (5) forment un élément de construction monobloc.

10. Dispositif selon la revendication 9, caractérisé en ce que l'élément de construction est en matière plastique.

11. Dispositif selon la revendication 9, caractérisé en ce que l'élément de construction est une pièce moulée par injection en métal léger.

12. Dispositif selon l'une des revendications 7 à 11, caractérisé en ce qu'au coin du gousset (1) des moyens (12) aptes à recevoir une ficelle indicatrice (13) sont prévus et que. l'appui diagonal (10) et la plaque (15), respectivement, a une division en degrés (14).

13. Dispositif selon la revendication 1, caractérisé en ce que le coin du gousset (la) est divisé, et ses deux parties (18,19) sont reliées par une sorte d'articulation à charnière.

14. Dispositif selon les revendications 7 et 13, caractérisé en ce que l'appui prévu entre les bandes (5) consiste en deux parties (10a,10b) jointes au milieu par une sorte d'articulation à charnière.
